# FASCICULE DE BREVET EUROPEEN

(11) **EP 0 406 100 B1**
(45) Date de publication et mention de la délivrance du brevet: **22.12.1993**
(21) Numéro de dépôt: 90401829.8
(22) Date de dépôt: 26.06.1990
(51) Int. Cl.: B60V 3/02

(54) **Véhicule ou ensemble porteur de charges à organes sustentateurs de type à coussin d'air**
Fahrzeug oder Vorrichtung zum Tragen von Lasten mit einer Vorrichtung des beweglichen Luftkissentyps
Vehicle or load supporting unit with device of the air-cushion sustaining type

(30) Priorité: 26.06.1989 FR 8908476
(43) Date de publication de la demande: 02.01.1991
(73) Titulaire: PROCEDES FRANCE TRANSPORT, Société Anonyme dite :, 12300 Decazeville (FR)
(72) Inventeur: Labarre, André, F-31240 L'Union (FR)
(74) Mandataire: Ohayon, Joseph

(56) Documents cités:
- FR-A- 2 451 301
- US-A- 3 251 432
- US-A- 3 260 322
- US-A- 3 276 530
- US-A- 3 295 621

## Description

La présente invention concerne les véhicules ou de façon générale les ensembles porteurs de charges à organes sustentateurs de type à coussin d'air et elle se rapporte en particulier à un organe sustentateur de type à coussin d'air, comportant un bâti ou carcasse en forme générale de disque, pourvu d'une partie centrale tubulaire ou pied de bâti, d'une cavité interne annulaire inférieure entourant le pied et d'une membrane souple inférieure attachée à la périphérie du bâti et au pied de bâti au niveau central inférieur.

On connaît par le document FR-A-2 451 301 un organe sustentateur de type à coussin d'air qui comprend un pied tubulaire, relié à la partie inférieure d'un élément vertical support, tel que colonne verticale, ladite colonne verticale étant reliée à sa partie supérieure à un châssis-support pour le plateau-porteur de charge, et une chambre annulaire ailetée reliée au pied par des joints d'articulation. Le fluide de sustentation pénètre dans la chambre annulaire pour être distribué vers une jupe qui délimite le coussin de fluide avec un élément de flottabilité.

On connaît également par le document US-A-3 251 432 un organe sustentateur à coussin d'air qui comprend un disque et une membrane souple annulaire, attachée à la surface inférieure du disque dans sa périphérie extérieure et intérieure. Le fluide de sustentation, introduit dans la cavité annulaire, formée entre la surface inférieure du disque et la membrane souple, est éjecté hors de la membrane dans la cavité tronc-conique formée entre la membrane et la surface d'appui, par des trous concentriques formés dans la membrane.

On sait que les organes sustentateurs à coussin d'air doivent assurer un travail en plaque sur la surface porteuse et qu'ils sont des organes intermédiaires essentiels entre cette surface et le véhicule associé.

L'invention vise à améliorer l'efficacité de ces organes sustentateurs.

Pour ce faire, l'invention propose un organe de type précité, caractérisé en ce que le bâti est conformé avec des raidisseurs supérieurs attachés au pied de bâti et formés sur sa surface externe supérieure et des raidisseurs intérieurs formés dans la cavité interne du bâti et reliés au pied de bâti, les raidisseurs étant disposés radialement relativement au pied de bâti, les raidisseurs intérieurs délimitant dans la cavité interne du bâti des secteurs triangulaires d'éjection du fluide hors de la membrane souple inférieure, l'admission de fluide dans chacun des secteurs étant réalisée par des trous radiaux formés à la base du pied de bâti.

Selon une caractéristique avantageuse de l'invention, l'organe souple comprend une membrane souple inférieure concave comportant une surface centrale alvéolée ou à relief de diffusion du fluide et une surface périphérique lisse ou de bord plus souple pour l'échappement du fluide.

Cette disposition d'admission du fluide dans des secteurs radiaux formés à la base du pied complétée par la membrane à relief de diffusion radial du fluide assure une haute diffusion du fluide propice à la sustentation.

Le point de liaison des organes sustentateurs au châssis est avantageusement disposé au niveau de l'effort de sustentation induit.

Cet effort peut être transmis directement au plateau de charges de l'ensemble porteur ou au véhicule par des éléments supports verticaux tels que colonnes verticales, solidaires du châssis, portant chacune un organe sustentateur au niveau inférieur et relié convenablement au plateau porteur ou au véhicule à sa partie supérieure. La fixation du plateau porteur ou du véhicule sur les colonnes est obtenue par des éléments tampons intermédiaires. D'autres points de fixation peuvent naturellement être utilisés sur le châssis, à toute fin de répartition des efforts sur le plateau porteur ou le véhicule. De préférence, la liaison choisie pour l'ensemble de ces points de fixation sera prévue relativement souple avec des tampons amortisseurs intermédiaires disposés sur un même plan de manière à compenser les flexions inévitables en travail du châssis et filtrer par ailleurs les vibrations de mouvement.

Le châssis-support peut également être conformé à base d'éléments en caisson étanches reliés l'un à l'autre, comportant avantageusement une poutre maîtresse en caisson, longitudinale et médiane et des éléments de traverse sur lesquels sont montés les organes sustentateurs. La poutre maîtresse longitudinale, outre qu'elle absorbe les efforts longitudinaux, fait office d'alimentation générale et distribue le fluide sur les traverses sans perte de charge grâce à sa section importante.

L'invention est illustrée ci-après à l'aide d'un exemple de réalisation et en référence au dessin annexé sur lequel :

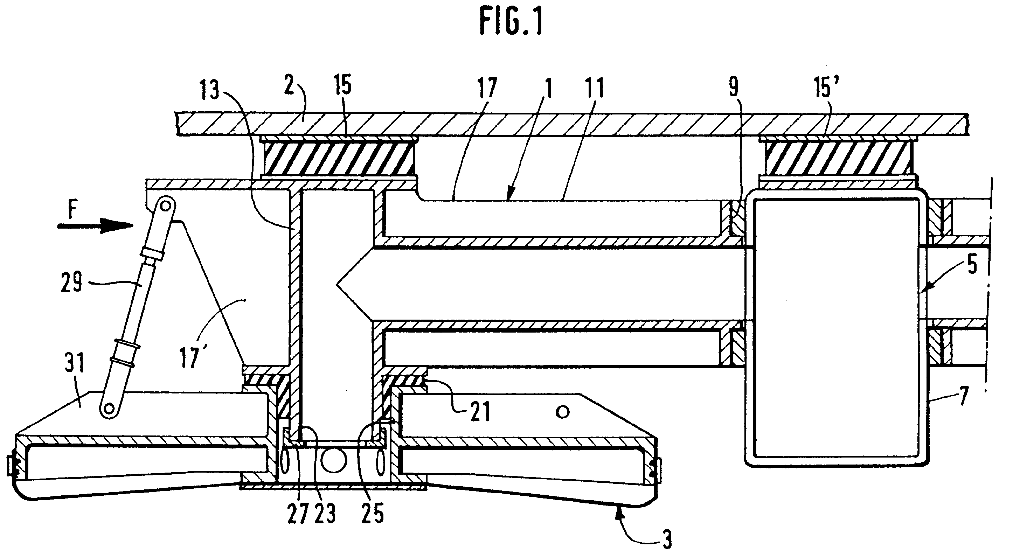

La figure 1 est une vue partielle en coupe médiane transversale d'un ensemble porteur à sustentation selon l'invention ;

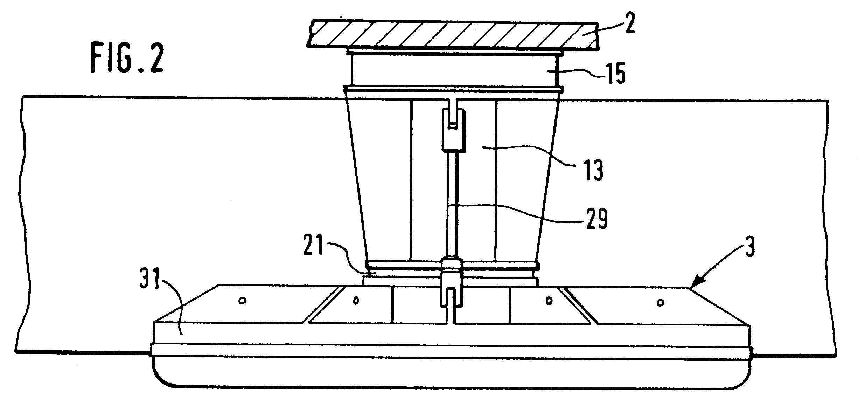

La figure 2 est une vue de côté de ce dispositif selon la flèche F de la figure 1 et,
Les figures 3 et 4 sont des vues de dessous respectivement du bâti de l'organe sustentateur correspondant et de la jupe de ce dernier.

Avec référence aux figures, le dispositif sustentateur selon l'invention consiste en l'ensemble d'un châssis-support 1 pour plateau porteur de charge 2 (ou cabine de véhicule) et d'organes à coussin d'air 3 reliés en partie inférieure au dit châssis. Les organes à coussin d'air 3 sont du type à membrane souple à fond concave, formant un film d'air ou de fluide porteur entre le fond et une surface d'appui plane.

Le châssis-support 1 est du type à éléments de poutre étanches 5 en communication interne, assemblés l'un à l'autre en liaison étanche pour contenir à pression adéquate le fluide porteur alimentant les organes à coussin d'air. Il comporte une poutre maîtresse 7 en forme de caisson, longitudinale et médiane, à laquelle sont reliées par des joints intermédiaires 9 (autorisant une légère déformation) des éléments de traverse 11. Les éléments de traverse 11 comportent chacun à leur extrémité une colonne verticale support 13 à laquelle est reliée en partie inférieure un organe à coussin d'air. A leur partie supérieure est fixé par l'intermédiaire d'un élément tampon 15 le plateau support 2. Les efforts de sustentation induits par les organes à coussin d'air sont donc transmis directement au plateau support 2. Le plateau est également fixé sur la poutre maîtresse longitudinale 7, par des tampons amortisseurs 15', identiques à ceux des colonnes et disposés sur un même plan. Cette disposition permet de mieux répartir les points d'appui. Les tampons de fixation sur les colonnes 15 et sur la poutre maîtresse 15' permettent de compenser en outre les légères déformations inévitables du châssis. Les nervures sur les traverses 17, de même que celles 17' au niveau extérieur haut des colonnes confortent la rigidité du châssis. Dans le même sens, les liaisons sur joint serré 9 entre les traverses et la poutre longitudinale sont très solides.

L'organe sustentateur 3 est monté en liaison souple sur l'embase inférieure 23 des colonnes. Un joint souple 21 est interposé serré entre l'embase 23 de colonne et le pied support 25 de l'organe sustentateur. Un obturateur 27 réglant le débit de fluide admis dans les organes à coussin d'air, est disposé légèrement sous cette liaison. Un bras amortisseur ou de réaction 29 est disposé latéralement entre la nervure de colonne 17' et le bâti de l'organe sustentateur.

La poutre longitudinale 7 est directement reliée à la source de fluide et le distribue aux traverses 11 puis dans les colonnes 13 et enfin aux organes sustentateurs 3.

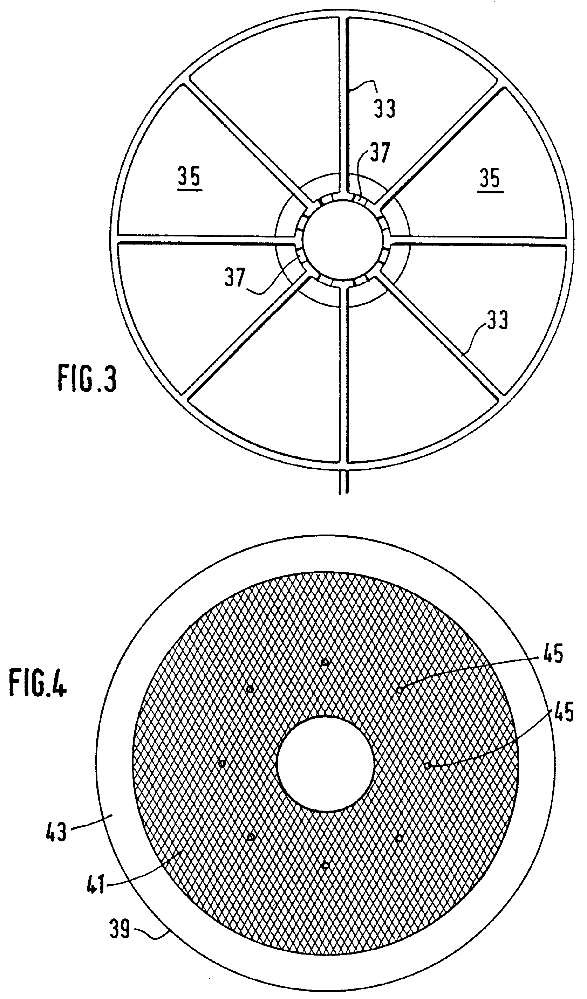

On notera que cette liaison retentit sur la structure de l'organe sustentateur et notamment son bâti conformé avec des raidisseurs supérieurs 31 et intérieurs radiaux donnant la rigidité nécessaire au travail en plaque de l'organe. Le pied porteur 25 du bâti est formé avec les nervures intérieures radiales de raidissements 33 (figure 3) délimitant des secteurs triangulaires 35 d'éjection de fluide. L'admission dans les secteurs 35 est réalisée par des trous radiaux 37 formés à la base du pied et ouvrant à la pointe de chacun des triangles juste sous l'obturateur 27. Enfin, la membrane 39 souple inférieure est du type cuvette à fond concave (figure 4) à surface centrale alvéolée intérieure 41 et/ou extérieure (formation d'une zone à relief améliorant la diffusion du fluide) sur un diamètre donné de la surface avec une surface périphérique lisse plus souple 43 favorisant l'échappement du fluide, l'éjection d'air hors de la membrane étant effectuée par des trous concentriques 45 de diamètre variable.

Ceci montre bien la simplicité de la nouvelle conception de liaison mécanique et fluidique des organes sustentateurs à fluide au châssis-support des véhicules ou ensembles porteurs de charge selon l'invention.

## Revendications

1. Organe sustentateur de type à coussin d'air (3), comportant un bâti ou carcasse en forme générale de disque, pourvu d'une partie centrale tubulaire ou pied de bâti (25), d'une cavité interne annulaire inférieure entourant le pied et d'une membrane souple inférieure attachée à la périphérie du bâti et au pied de bâti au niveau central inférieur, caractérisé en ce que le bâti est conformé avec des raidisseurs supérieurs (31) attachés au pied de bâti et formés sur sa surface externe supérieure et des raidisseurs intérieurs (33) formés dans la cavité interne du bâti et reliés au pied du bâti, les raidisseurs (31) et (33) étant disposés radialement relativement au pied de bâti, les raidisseurs intérieurs (33) délimitant dans la cavité interne du bâti des secteurs triangulaires (35) d'éjection de fluide hors de la membrane souple inférieure (39), l'admission de fluide dans chacun des secteurs étant réalisée par des trous radiaux (37) formés à la base du pied de bâti.

2. Organe sustentateur selon la revendication 1, caractérisé en ce que la membrane souple (39) est concave, comportant une surface centrale alvéolée (41) ou à relief de diffusion du fluide et une surface périphérique lisse ou de bord plus souple (43) pour l'échappement du fluide.

3. Organe sustentateur selon l'une des revendications 1 et 2, caractérisé en ce que le point de liaison de support mécanique et le point d'alimentation en fluide des organes sustentateurs (3) sur le châssis sont confondus.

4. Organe sustentateur selon l'une des revendications précédentes, caractérisé en ce que ledit point de liaison des organes sustentateurs (3) au châssis est disposé au niveau de l'effort de sustentation induit.

5. Organe sustentateur selon la revendication 4, caractérisé en ce que ledit point de liaison consiste par exemple en une embase (23) de sortie inférieure formée sur le châssis à laquelle s'adapte le pied correspondant (25) de l'organe sustentateur (3).

6. Organe sustentateur selon la revendication 5, caractérisé en ce que la jonction entre lesdits embase (23) et pied (25) est rendue relativement souple par un joint étanche (21) interposé entre eux.

7. Organe sustentateur selon l'une des revendications 4- 6, caractérisé en ce que ledit effort de sustentation induit est transmis directement au plateau de charges (2) de l'ensemble porteur ou au véhicule par des éléments verticaux supports tels que colonnes verticales (13), solidaires du châssis, portant chacun un organe sustentateur (3) au niveau inférieur et reliés convenablement au plateau porteur ou au véhicule à sa partie supérieure.

8. Organe sustentateur selon l'une des revendications précédentes, caractérisé en ce qu'un obturateur (27) de réglage de débit du fluide admis à chaque organe sustentateur (3) est disposé au niveau de l'embase (23) ou à tout autre point du châssis.

9. Véhicule ou ensemble porteur de charges comprenant des organes sustentateurs à coussin d'air tels que définis dans l'une quelconque des revendications précédentes.

## Patentansprüche

1. Tragelement in der Art eines Luftkissens (3), das einen im wesentlichen scheibenförmigen Rahmen bzw. ein Untergestell aufweist, das einen mittleren rohrförmigen Abschnitt bzw. Rahmenfuß (25) sowie einen unteren ringförmigen Innenhohlraum besitzt, der den Fuß umschließt, und eine elastische untere Membran, die am Umfang des Rahmens und am Rahmenfuß auf einer unteren Mittelebene befestigt ist, **dadurch gekenn****zeichnet,** daß der Rahmen mit oberen Aussteifungselementen (31) ausgebildet ist, welche am Rahmenfuß angeschlossen und auf dessen äußerer Oberseite ausgebildet sind, sowie mit innenliegenden Aussteifungselementen (33), die im Innenhohlraum des Rahmens ausgebildet und mit dem Rahmenfuß verbunden sind, wobei die Aussteifungselemente (31) und (33) relativ zum Rahmenfuß radial angeordnet sind und wobei die innenliegenden Aussteifungselemente (33) im Innenhohlraum des Rahmens dreieckförmige Sektoren für den Austritt eines Strömungsmittels aus der elastischen unteren Membran (39) begrenzen, während die Strömungsmittelzufuhr zu jedem dieser Sektoren über radiale Löcher (37) erfolgt, die an der Basis des Rahmenfußes ausgebildet sind.

2. Tragelement nach Anspruch 1, dadurch gekennzeichnet, daß die elastische Membran (39) konkav geformt ist und eine mittlere zellig strukturierte bzw. reliefartig ausgebildete Fläche (41) zur Ausbringung des Strömungsmittels, sowie eine glatte periphere Fläche bzw. einen stärker elastischen Rand (43) zum Entweichen des Strömungsmittels aufweist.

3. Tragelement nach einem der Ansprüche 1 und 2, dadurch gekennzeichnet, daß der Verbindungspunkt der mechanischen Stütze und der Zufuhrpunkt zur Zuführung des Strömungsmittels der Tragelemente (3) auf dem Rahmen zusammenfallen.

4. Tragelement nach einem der vorhergehenden Ansprüche, dadurch gekennzeichnet, daß der Verbindungspunkt, an dem die Tragelemente (3) mit dem Rahmen verbunden sind, in Höhe der eingeleiteten Tragkraft vorgesehen ist.

5. Tragelement nach Anspruch 4, dadurch gekennzeichnet, daß der Verbindungspunkt beispielsweise aus einer unteren Austrittsanschlußfläche (23) besteht, die auf dem Rahmen ausgebildet ist und an welche der entsprechende Fuß (25) des Tragelements (3) angepaßt ist.

6. Tragelement nach Anspruch 5, dadurch gekennzeichnet, daß die Verbindung zwischen der Anschlußfläche (23) und dem Fuß (25) vergleichsweise elastisch mittels einer dazwischen eingesetzten Dichtung (21) ausgeführt ist.

7. Tragelement nach einem der Ansprüche 4 bis 6,, dadurch gekennzeichnet, daß die eingeleitete Tragkraft direkt auf die Lasttragplatte (2) der Tragkonstruktion bzw. auf ein Fahrzeug über vertikale Stützelemente, beispielsweise vertikale Stützen (13), übertragen wird, die fest mit dem Rahmen verbunden sind und jeweils auf einer unteren Ebene ein Tragelement (3) tragen und in entsprechender Weise mit der Tragplatte bzw. dem Fahrzeug in dessen oberem Teil verbunden sind.

8. Tragelement nach einem der vorhergehenden Ansprüche, dadurch gekennzeichnet, daß ein Verschlußteil (27) zur Regelung der Austrittsmenge des jedem Tragelement (3) zugeführten Strömungsmittels in Höhe der Anschlußfläche (23) bzw. an jedem anderen Punkt auf dem Rahmen vorgesehen ist.

9. Fahrzeug bzw. Lasttragkonstruktion mit Luftkissen-Tragelementen nach einem der vorhergehenden Ansprüche.

## Claims

1. A lifting member of the air-cushion (3) type, comprising a framework or skeleton in the general shape of a disc, provided with a central tubular part or frame foot (25), with a lower inner annular cavity surrounding the foot and with a lower flexible diaphragm attached to the periphery of the frame and to the foot of the frame at the lower central level, characterised in that the frame is designed with upper bracing members (31) attached to the foot of the frame and formed on its upper outer surface and with inner bracing members (33) formed in the inner cavity of the frame and connected to the foot of the frame, the bracing members (31) and (33) being disposed radially relative to the foot of the frame, the inner bracing members (33) delimiting, inside the inner cavity of the frame, triangular sectors (35) for discharging fluid away from the lower flexible diaphragm (39), intake of fluid into each of the sectors being effected by virtue of radial holes (37) formed at the base of the foot of the frame.

2. A lifting member according to Claim 1, characterised in that the flexible diaphragm (39) is concave, comprising a central surface (41) which is pitted or in relief for the diffusion of fluid and a smooth peripheral surface or a more flexible edge surface (43) for fluid to escape.

3. A lifting member according to one of Claims 1 and 2, characterised in that the point of connection of the mechanical support and the point for supply of fluid to the lifting members (3) on the chassis are coincident.

4. A lifting member according to one of the preceding claims, characterised in that said point of connection of the lifting members (3) to the chassis is disposed at the level of the lifting force applied.

5. A lifting member according to Claim 4, characterised in that said point of connection may, for example, consist of a lower discharge base (23) formed on the chassis to which the corresponding foot (25) of the lifting member (3) is adapted.

6. A lifting member according to Claim 5, characterised in that the function between said base (23) and the foot (25) is made relatively flexible by virtue of a sealing joint (21) placed between them.

7. A lifting member according to one of Claims 4 - 6, characterised in that said lifting force applied is transmitted directly to the load platform (2) of the carrying assembly or to the vehicle by virtue of vertical support elements such as vertical columns (13), fixed to the chassis, each one bearing a lifting member (3) at the lower level and being suitably connected to the carrying platform or to the vehicle at its upped part.

8. A lifting member according to one of the preceding claims, characterised in that a closing device (27) for regulating the flow of fluid entering each lifting member (3) is disposed at the level of the base (23) or at any other point on the chassis.

9. A vehicle or assembly for carrying loads comprising air-cushion type lifting members such as defined in any of the preceding claims.
